# EUROPÄISCHE PATENTSCHRIFT

(11) **EP 2 732 248 B1**
(45) Veröffentlichungstag und Bekanntmachung des Hinweises auf die Patenterteilung: **28.07.2021**
(21) Anmeldenummer: 12725810.1
(22) Anmeldetag: 06.06.2012
(51) Int. Cl.: G01F 1/66

(54) **ULTRASCHALL-DURCHFLUSSMESSGERÄT**
ULTRASONIC FLOW METER
DÉBITMÈTRE À ULTRASONS

(30) Priorität: 15.07.2011 DE 102011079250
(43) Veröffentlichungstag der Anmeldung: 21.05.2014
(73) Patentinhaber: Endress+Hauser Flowtec AG, 4153 Reinach (BL) (CH)
(72) Erfinder: WIEST, Achim, 79576 Weil am Rhein (DE); BERGER, Andreas, 79686 Hasel-Glashütten (DE); GRUNWALD, Sascha, 79585 Steinen (DE)
(74) Vertreter: Andres, Angelika Maria
(86) Internationale Anmeldenummer: PCT/EP2012/060704
(87) Internationale Veröffentlichungsnummer: WO 2013/010720

(56) Entgegenhaltungen:
- EP-A1- 0 268 314
- EP-A1- 0 715 155
- EP-A1- 2 282 178
- EP-A2- 1 255 094
- DE-U1- 29 803 912
- None

## Beschreibung

Die vorliegende Erfindung betrifft ein Ultraschall-Durchflussmessgerät, welches ein Messrohr mit einer geraden Messrohrachse, einen Sender zum Senden eines akustischen Signals auf einen ersten Signalpfad, einen Empfänger zum Empfangen des akustischen Signals auf dem ersten Signalpfad und zumindest eine erste Reflexionsfläche umfasst, an welcher das akustische Signal auf dem ersten Signalpfad jeweils zumindest einmal reflektiert wird, wobei das auf die erste Reflexionsfläche einfallende akustische Signal und das an der ersten Reflexionsfläche reflektierte akustische Signal jeweils entlang eines geraden Teilabschnitts des ersten Signalpfads verläuft.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen.

Die bekannten Ultraschall-Durchflussmessgeräte arbeiten häufig nach dem Laufzeitdifferenz-Prinzip. Beim Laufzeitdifferenz-Prinzip werden die unterschiedlichen Laufzeiten von Ultraschallwellen, insbesondere Ultraschallimpulsen, so genannten Bursts, relativ zur Strömungsrichtung der Flüssigkeit ausgewertet. Hierzu werden Ultraschallimpulse in einem bestimmten Winkel zur Rohrachse sowohl mit als auch entgegen der Strömung gesendet. Aus der Laufzeitdifferenz lässt sich die Fließgeschwindigkeit und damit bei bekanntem Durchmesser des Rohrleitungsabschnitts der Volumendurchfluss bestimmen.

Die Ultraschallwellen werden mit Hilfe so genannter Ultraschallwandler erzeugt bzw. empfangen. Hierfür sind Ultraschallwandler in der Rohrwandung des betreffenden Rohrleitungsabschnitts fest angebracht. Es sind auch Clamp-on-Ultraschall-Durchflussmesssysteme erhältlich. Bei diesen Systemen werden die Ultraschallwandler von außerhalb des Messrohrs an dessen Rohrwand gepresst. Ein großer Vorteil von Clamp-On-Ultraschall-Durchflussmesssystemen ist, dass sie das Messmedium nicht berühren und auf eine bereits bestehende Rohrleitung angebracht werden.

Die Ultraschallwandler bestehen normalerweise aus einem elektromechanischen Wandlerelement, z.B. ein piezoelektrisches Element, und einer Koppelschicht. Im elektromechanischen Wandlerelement werden die Ultraschallwellen als akustische Signale erzeugt und über die Koppelschicht zur Rohrwandung geführt und von dort in die Flüssigkeit geleitet, bei Clamp-On-Systemen, oder sie werden bei Inline-Systemen über die Koppelschicht in das Messmedium eingekoppelt. Dann wird die Koppelschicht auch seltener Membran genannt.

Zwischen dem piezoelektrischen Element und der Koppelschicht kann eine weitere Koppelschicht angeordnet sein, eine so genannte Anpassungsschicht. Die Anpassungsschicht übernimmt dabei die Funktion der Transmission des Ultraschallsignals und gleichzeitig die Reduktion einer durch unterschiedliche akustische Impedanzen verursachte Reflexion an Grenzschichten zwischen zwei Materialen.

Sowohl bei Clamp-On-Systemen, als auch bei Inline-Systemen sind die Ultraschallwandler in einer gemeinsamen Ebene am Messrohr angeordnet, entweder auf gegenüberliegenden Seiten des Messrohrs, dann verläuft das akustische Signal, projiziert auf einen Rohrquerschnitt, einmal entlang einer Sekante durch das Messrohr, oder auf derselben Seite des Messrohrs, dann wird das akustische Signal an der gegenüberliegenden Seite des Messrohrs reflektiert, wodurch das akustische Signal zweimal das Messrohr entlang der auf den Querschnitt durch das Messrohr projizierten Sekante durchquert. Die US 4,103,551 und die US 4,610,167 zeigen Ultraschall-Durchflussmessgeräte mit Reflexionen an dafür im Messrohr vorgesehenen Reflexionsflächen. Nun sind auch Mehrpfad-Systeme bekannt geworden, welche mehrere Ultraschallwandlerpaare aufweist, welche jeweils einen Signalpfad bilden, entlang welchem die akustischen Signale durch das Messrohr verlaufen. Die jeweiligen Signalpfade und die zugehörigen Ultraschallwandler liegen dabei in zueinander parallelen und zur Messrohrachse parallelen Ebenen. Die US 4,024,760 oder die US 7,706,986 zeigen beispielhaft solch Mehrpfad-Systeme. Ein Vorteil von Mehrpfad-Systemen ist, dass sie das Profil der Strömung des Messmediums im Messrohr an mehreren Stellen vermessen und dadurch hochgenaue Messwerte für den Durchfluss bereitstellen können. Erreicht wird dies unter anderem auch dadurch, dass die einzelnen Laufzeiten entlang der unterschiedlichen Signalpfade verschieden gewichtet werden. Nachteilig bei Mehrpfad-Systemen sind jedoch ihre Herstellungskosten, da mehrere Ultraschallwandler und gegebenenfalls eine aufwendige Auswerteelektronik verbaut sind.

Zur Gewichtung der Signalpfade gibt es verschiedene Arbeiten. Der Aufsatz "Comparsion of integration methods for multipath accoustic discharge measurements" von T. Tresch, T. Staubli und P. Gruber in der Begleitschrift zur 6th international Conference on Innovation in Hydraulic Efficiency Measurements, 30 Juli - 1. August 2006 in Portland, Oregon, USA, vergleicht gängige Methoden zur Gewichtung der Laufzeiten entlang unterschiedlicher Signalpfade zur Berechnung des Durchflusses.

Die DE 198 61 073 A1 und die DE 297 19 730 U1 offenbaren jeweils eine Durchflussmesseinrichtung mit einem ersten Schallpfad, welcher mehrmals im Messrohr reflektiert wird.

Die US 7,845,240 und die EP 2 282 178 A1 offenbaren jeweils ein Durchflussmessgerät, welches ausgehend von einem Sender einen ersten Signalpfad aussendet, welcher über eine Zweifachbrechung ein Signal an einen Empfänger überträgt. Anschließend sendet der Empfänger, welcher nunmehr die Funktion eines Senders hat, ein Ultraschallsignal auf einem zweiten Signalpfad mittels einer Zweifachreflexion oder Mehrfachreflexion an den ursprünglichen Sender, welcher nunmehr die Funktion des Empfängers hat, zurück. Diese Messanordnung weist eine Signalauswertung auf, welche die Werte des ersten und des zweiten Signalpfades berücksichtigt. Nachteilig daran ist, dass sich während des Durchlaufens des ersten und des zweiten Signalpfades die Eigenschaften der Strömung bereits geändert haben, so dass beispielsweise eine Rotation des Mediums im Messrohr nicht berücksichtigt wird, da sie nur in einer Richtung erfasst wird, jedoch nicht in der Gegenrichtung.

Die EP 0715 155 A1 weist eine Messanordnung mit einer Mehrfachbrechung auf, wobei die Teilabschnitte des Signalpfades lediglich eine Ebene bilden, die parallel zur Messrohrachse verläuft. Dadurch kann beispielsweise eine Rotation des Mediums im Rohr nicht kompensiert werden.

Die WO 02/44662 A1 offenbart ein Durchflussmessgerät bei welchem ein Signal auf einem Signalpfad durch Mehrfachreflexion durch ein Messrohr geleitet wird. Dabei bilden die Teilpfade des Signalpfades eine einzige Ebene aus, die parallel zur Messrohrachse verläuft. Auch hier kann beispielsweise kein Rotationsausgleich erfolgen.

Die WO1995012110A1 zeigt ein Ultraschall-Durchflussmessgerät mit einem Messrohr mit ebenen Wandungen und einer geraden Messrohrachse und zumindest einer Reflexionsfläche im Messrohr mit einer Flächennormalen auf dieser Reflexionsfläche, welche drei von Null verschiedene Komponenten in einem rechtwinkligen Koordinatensystem aufweist, dessen eine Achse der Messrohrachse entspricht. Das Dokument lehrt, dass ein Ultraschallsignal mit einer vorgegebenen Breite, welche deutlich größer ist als ein punktförmiges Signal, eine über diese Breite gaußförmig verteilte Sensitivität aufweist, zur Durchflussmessung verwendet wird. Die Breite des Signals entspricht dabei näherungsweise der Breite des Vierkantmessrohrs. Würde ein solches Signal nun parallel zu den Seitenwänden durch das Messrohr verlaufen, würde der Bereich mit der höchsten Sensitivität durch den mittleren Bereich des Messrohrs verlaufen, und folglich auch die höheren Strömungsgeschwindigkeiten mit höheren Wertigkeiten registrieren, was bei sehr kleinen Strömungsgeschwindigkeiten zu einem Messfehler führt. Das Dokument lehrt daher weiter, das Messrohr weitgehend homogen zu durchschallen, indem die Ultraschallsignale durch alle Bereiche des Messrohrs mittels orientierter Reflexionen geführt werden. Zur Veranschaulichung wurde das breite Ultraschallsignal durch einzelne Teilstrahlen dargestellt. Die Weglängen der einzelnen Teilstrahlen sind gleich lang, so dass sich die Teilstrahlen nicht durch Interferenz auslöschen.

Die Aufgabe der Erfindung besteht darin, ein Ultraschall-Durchflussmessgerät vorzuschlagen, welches den Durchfluss hochgenau ermittelt und dabei kostengünstig herzustellen ist.

Die Aufgabe wird gelöst durch den Gegenstand des unabhängigen Anspruchs 1. Weiterbildungen und Ausgestaltungen der Erfindung finden sich in den Merkmalen der abhängigen Ansprüche wieder.

Ein erfindungsgemäßes Ultraschall-Durchflussmessgerät zur Durchflussmessung, umfasst ein Messrohr mit einer geraden Messrohrachse, zumindest einen ersten Sender zum Senden eines akustischen Signals auf einen ersten Signalpfad, zumindest einen ersten Empfänger zum Empfangen des akustischen Signals auf dem ersten Signalpfad und zumindest eine erste Reflexionsfläche, wobei der Sender, der Empfänger und die erste Reflexionsfläche so zueinander ausgerichtet und im oder am Messrohr angeordnet sind, dass das akustische Signal auf dem ersten Signalpfad vom ersten Sender zum ersten Empfänger so an der ersten Reflexionsfläche reflektiert wird, dass die Summe aller auf die Messrohrachse projizierten Längen aller ersten Teilabschnitte des ersten Signalpfads mit einem vorgegebenem ersten Abstand ungleich Null zur Messrohrachse, welche ersten Teilabschnitte in einer zur Messrohrachse parallelen, ersten Ebene verlaufen, einen vorgegebenen ersten Wert ungleich Null aufweist und wobei die Summe aller auf die Messrohrachse projizierten Längen aller zweiten Teilabschnitte des ersten Signalpfads mit dem ersten Abstand zur Messrohrachse, welche zweiten Teilabschnitte in einer von der ersten Ebene verschiedenen, zur Messrohrachse parallelen, zweiten Ebene verlaufen, den vorgegebenen ersten Wert aufweist,
wobei die erste Ebene in einer ersten Hälfte des Messrohrs verläuft und,
wobei die zweite Ebene in einer zweiten Hälfte des Messrohrs verläuft, wobei die erste Hälfte des Messrohrs, genauer gesagt die erste Ebene der ersten Hälfte, keine Überdeckung mit der zweiten Hälfte, genauer gesagt der zweiten Ebene der zweiten Hälfte, des Messrohrs aufweist.

Als Hälften sind dabei umgangssprachlich zwei Rohrsegmente bzw. -abschnitte zu verstehen, die jeweils zueinander gleiche Längen, aber auch unterschiedliche Längen aufweisen können. So kann die erste Hälfte bzw. der erste Rohrabschnitt eine gleiche oder unterschiedliche Länge aufweisen wie die zweite Hälfte bzw. der zweite Rohrabschnitt.

Durch die beanspruchte Anordnung der ersten und der zweiten Ebene können insbesondere auch Strömungskomponenten zum Ausgleich einer Rotationsbewegung des Mediums im Messrohr bei der Messung berücksichtigt werden.

Dabei wird die Erfassung der Strömungskomponenten durch einen einzigen Signalpfad möglich, so dass lediglich ein Sender und ein Empfänger benötigt wird. Außerdem steht das Messergebnis nach dem Durchlaufen des Signalpfades direkt zur Verfügung und es bedarf keines zweiten Signalpfades zur Auswertung.

Das Signal auf erstem Signalpfad weist eine Richtungskomponente in oder entgegen der Richtung der Messrohrachse auf. Die erste und die zweite Ebene sind nicht deckungsgleich.

Sowohl als Sender, als auch als Empfänger dienen üblicherweise Ultraschallwandler, insbesondere elektromechanische Wandler, z.B. piezoelektrische Elemente, welche geeignet sind, das akustische Signal, insbesondere einen Ultraschallimpuls oder eine oder mehrere Ultraschallwellen, zu Senden, als auch zu Empfangen. Werden Ultraschallwandler als Sender und Empfänger eingesetzt, kann das akustische Signal entlang dem ersten Signalpfad hin und wieder zurück, also in zwei Richtungen, verlaufen. Sender und Empfänger sind somit vertauschbar.

In einer Ausgestaltung der Erfindung ist der Sender geeignet zum Empfangen eines akustischen Signals auf dem ersten Signalpfad und der Empfänger ist geeignet zum Senden des akustischen Signals auf den ersten Signalpfad. Es handelt sich bei Sender und Empfänger um Ultraschallwandler, insbesondere um Ultraschallwandler mit elektromechanischen Wandlerelementen, z.B. piezoelektrischen Wandlerelementen.

Als Signalpfad, auch akustischer Pfad genannt, wird der Weg des akustischen Signals, also z.B. der Ultraschallwelle oder des Ultraschallimpulses, zwischen dem Sender, welcher das akustische Signal aussendet, und dem Empfänger, welcher das akustische Signal empfängt, bezeichnet. In einer Ausgestaltung der Erfindung wird das akustische Signal, wie bei einem Inline-System üblich, senkrecht zur Membran abgestrahlt. Der Empfänger ist dann so im oder am Messrohr platziert, dass das Signal wiederum senkrecht auf seine Membran trifft.

Als ein akustisches Signal wird insbesondere eine Schallwelle oder ein Paket von Schallwellen bezeichnet. Als Reflexionsfläche dient eine Grenzfläche, z.B. gebildet zwischen Messmedium und Messrohr oder einem am oder im Messrohr angeordneten Reflektor. Nach einer Ausgestaltung der Erfindung ist die Reflexionsfläche eine Oberfläche von einem separat im Messrohr angeordneten Reflektor, welche das Messmedium im Betrieb des Ultraschall-Durchflussmessgeräts berührt.

Gemäß einer Ausgestaltung der Erfindung wird das akustische Signal senkrecht zu einer Membran eines ersten Ultraschallwandlers als Sender ausgesendet und senkrecht auf einer Membran eines zweiten Ultraschallwandlers als Empfänger empfangen, wobei beide Ultraschallwandler so zur Reflexionsfläche ausgerichtet sind, dass das akustische Signal an der Reflexionsfläche zum zweiten Ultraschallwandler reflektiert wird.

Die Ausrichtung der Reflexionsfläche erfolgt z.B. über die Winkelhalbierende zwischen einfallendem akustischem Signal entlang eines geraden Teilabschnitts und reflektiertem akustischen Signal entlang eines weiteren geraden Teilabschnitts. Die Winkelhalbierende ist die Normale auf die Reflexionsfläche. In einer Ausgestaltung der Erfindung schneidet die Normale auf die erste Reflexionsfläche die Messrohrachse senkrecht.

Der Abstand zweier Strecken oder Geraden wird hier, wie in der Mathematik üblich, definiert. Verlaufen zwei Geraden, damit sind auch die geraden Teilabschnitte, die Messrohrachse oder eventuelle Schnittgeraden umfasst, windschief zueinander im Raum, wird der Abstand der einen Geraden zu einer zu ihr parallelen Hilfsebene berechnet, in welcher die andere Gerade liegt.

Zwei Geraden, die nicht deckungsgleich sind und keinen gemeinsamen Schnittpunkt besitzen, weisen stets einen Abstand größer Null zueinander auf. Dieser bemisst sich in der Länge des Gemeinlots zwischen den beiden Geraden, welches auf beiden Geraden senkrecht steht. Selbst für zueinander windschiefe Geraden existiert ein Gemeinlot. Daher lässt sich auch eine Ebene konstruieren, in welcher eine Gerade liegt, und welche zur anderen Gerade parallel ist. Es lässt sich somit eine erste Ebene konstruieren, in welcher die erste Gerade liegt und welche parallel zur Messrohrachse ist. Analog existiert eine zweite Ebene parallel zur Messrohrachse in welcher die zweite Gerade liegt. Erfindungsgemäß wird das akustische Signal auf dem ersten Signalpfad an der ersten Reflexionsfläche reflektiert, wobei gemäß einem Ausführungsbeispiel das auf die erste Reflexionsfläche einfallende akustische Signal entlang des ersten geraden Teilabschnitts in einer ersten Ebene parallel zur Messrohrachse verläuft, welche erste Ebene den ersten Abstand zur Messrohrachse aufweist, und wobei das an der ersten Reflexionsfläche reflektierte akustische Signal entlang des zweiten geraden Teilabschnitts in einer zweiten Ebene parallel zur Messrohrachse verläuft, welche zweite Ebene den zweiten Abstand zur Messrohrachse aufweist. Die erste Ebene würde einen ersten geraden Kreiszylinder mit dem ersten Abstand als Radius seiner Grundfläche entlang einer zur Messrohrachse parallelen Geraden, welche Teil seiner Mantelfläche ist, tangieren, genau wie die zweite Ebene einen zweiten geraden Kreiszylinder mit dem zweiten Abstand als Radius seiner Grundfläche tangieren würde. Beide Ebenen schneiden sich in einer Schnittgeraden, welche Schnittgerade ebenfalls parallel zur Messrohrachse verläuft. Die Schnittgerade liegt dabei insbesondere im Bereich der ersten Reflexionsfläche. Im zugrunde liegenden Modell breiten sich die akustischen Signale entlang geraden Teilabschnitten aus. Daher wird die Schnittgerade vom ersten geraden Teilabschnitt und vom zweiten geraden Teilabschnitt im Punkt der Reflexion des akustischen Signals auf dem ersten Signalpfad an der Reflexionsfläche geschnitten. Natürlich ist dies ein Model. In der Praxis ist der erste Signalpfad nicht nur ein Punkt breit und damit ist der Punkt der Reflexion eher eine Fläche im Bereich der Reflexionsfläche.

In einer ersten Ausgestaltung der Erfindung handelt es sich bei dem Messrohr um ein Messrohr mit elliptischem, insbesondere kreisrundem Querschnitt, wobei die Messrohrachse dann auch als Haupt-, Mittel- oder Längsachse bezeichnet werden kann. Die Hauptströmungsrichtung des Mediums im Messrohr führt entlang der Messrohrachse.

Gemäß einer weiteren Ausgestaltung betragen die Abmessungen des Messrohrs ein Vielfaches der Abmessungen der Ultraschallwandler bzw. der Sender und/oder Empfänger. So ist bei einem runden Messrohr und scheibenförmigen Sendern und/oder Empfänger der Durchmesser des Messrohrs zumindest doppelt, insbesondere fünffach, insbesondere mindestens zehnfach so groß, wie der Durchmesser der Scheibe der Sender und/oder Empfänger. Weist das Messrohr beispielsweise einen eckigen, insbesondere viereckigen, insbesondere quadratischen Querschnitt auf, und/oder weisen die Ultraschallwandler als Sender und/oder Empfänger eine anders geartete Form auf, sind diese z.B. ebenfalls viereckig, so ist der Flächeninhalt des Querschnitts des Lumens des Messrohrs zumindest vierfach so groß, wie der Flächeninhalt des Ultraschallwandlers, oder gar 25-fach oder gar mindestens 100-fach so groß.

Nach einer Ausgestaltung des erfindungsgemäßen Ultraschall-Durchflussmessgeräts wird zur Durchflussmessung ein Laufzeitdifferenzverfahren verwendet. Das erfindungsgemäße Ultraschall-Durchflussmessgerät ist entsprechend dazu geeignet ausgestaltet.

In einer Weiterbildung der Erfindung sind die erste Reflexionsfläche und/oder jede weitere Reflexionsfläche im oder am Messrohr so zum Sender und Empfänger angeordnet, dass sich die erste und die zweite Ebene in einer Geraden schneiden, welche parallel zur Messrohrachse verläuft.

Gemäß einer weiteren Weiterbildung des erfindungsgemäßen Ultraschall-Durchflussmessgeräts sind die erste Reflexionsfläche und/oder jede weitere Reflexionsfläche im oder am Messrohr so zum Sender und Empfänger angeordnet, dass die Gerade in welcher sich die erste und die zweite Ebene schneiden in der ersten Reflexionsfläche liegt und/oder dass der Schnittwinkel der ersten und zweiten Ebene zwischen 2° und 175° insbesondere 20° und 120° beträgt.

Weitergebildet verläuft die erste Ebene in einer ersten Hälfte des Messrohrs und die zweite Ebene verläuft in einer zweiten Hälfte des Messrohrs, wobei die erste Hälfte des Messrohrs keine Überdeckung mit der zweiten Hälfte des Messrohrs aufweist. Die erste Reflexionsfläche und/oder jede weitere Reflexionsfläche sind im oder am Messrohr entsprechend zum Sender und Empfänger angeordnet.

Alternativ befindet sich der längere Teil der Teilstrahlen jeweils in unterschiedlichen Rohrhälften.

Gemäß einer weiteren Weiterbildung der Erfindung existiert eine dritte Ebene, in welcher die Messrohrachse und eine Gerade, in welcher sich die erste und die zweite Ebene schneiden, liegen, zu welcher dritten Ebene die erste und die zweite Ebene denselben Winkel aufweisen. Diese Ebene teilt die erste Hälfte des Messrohrs von der zweiten Hälfte des Messrohrs.

Gemäß einer weiteren Weiterbildung der Erfindung verläuft das auf die erste Reflexionsfläche einfallende akustische Signal entlang des ersten geraden Teilabschnitts und das an der ersten Reflexionsfläche reflektierte akustische Signal verläuft entlang des zweiten geraden Teilabschnitts. Die erste Reflexionsfläche ist entsprechend im Messrohr angeordnet. Insbesondere weisen das auf die erste Reflexionsfläche einfallende akustische Signal entlang des ersten geraden Teilabschnitts und das an der ersten Reflexionsfläche reflektierte akustische Signal entlang des zweiten geraden Teilabschnitts dieselbe auf die Messrohrachse projizierte Länge auf. Weitergebildet schließen das auf die erste Reflexionsfläche einfallende akustische Signal entlang des ersten geraden Teilabschnitts und das an der ersten Reflexionsfläche reflektierte akustische Signal verläuft entlang des zweiten geraden Teilabschnitts einen auf einen Querschnitt des Messrohrs projizierten Winkel zwischen 2° und 175° insbesondere 20° und 120° ein und/oder einen auf die dritte Ebene projizierten Winkel zwischen 2° und 175° insbesondere 20° und 120° und/oder sie schließen jeweils einen Winkel zwischen 1° und 88° mit der dritten Ebene ein. Wie üblich ist kleinste Winkel der Schnittwinkel, wenn sich zwei Geraden im Raum schneiden. In einem rechtwinklig dreiachsigen Koordinatensystem weist somit zumindest ein Richtungsvektor des einen Teilstrahls entgegen eines Richtungsvektors des anderen Teilstrahls.

Gemäß einer weiteren Weiterbildung sind der erste Wert der Summe aller auf die Messrohrachse projizierten Längen aller ersten Teilabschnitte des ersten Signalpfads mit dem ersten Abstand zur Messrohrachse, welche ersten Teilabschnitte in der ersten Ebene verlaufen, mit einer Berechnungsvorschrift in Abhängigkeit vom ersten Abstand berechnet. Beispielsweise sind die Summen der Werte der auf die Messrohrachse projizierten Längen aller Teilabschnitte des ersten Signalpfads, welche denselben Abstand zur Messrohrachse aufweisen, jedoch in den verschiedenen Ebenen verlaufen, proportional zu Gewichtungsfaktoren zur Gewichtung der Laufzeit des akustischen Signals entlang eines Messpfads mit demselben Abstand zur Messrohrachse eines analogen Mehrpfad-Ultraschall-Durchflussmessgeräts mit mehreren Messpfaden mit denselben Abständen, wie die unterschiedlichen Teilabschnitte des ersten Signalpfads zur Messrohrachse. Weisen die Messpfade des Mehrpfad-Ultraschall-Durchflussmessgeräts dieselben Winkel zur Messrohrachse auf, werden die Gewichtungsfaktoren beispielsweise nach der Gauss-Jacobi oder der OWICS-Methode, wie sie in der Dissertation von A. Voser: "Analyse und Fehleroptimierung der mehrpfadigen akustischen Durchflussmessung in Wasserkraftanlagen", ETH Zürich Dissertation Nr. 13102, 1999, beschrieben sind, in Abhängigkeit vom jeweiligen Abstand zur Messrohrachse berechnet. Analog weisen die Teilabschnitte vorgegebene Längen auf, die so bemessen sind, dass die Summen aller Werte der auf die Messrohrachse projizierten Längen aller Teilabschnitte des ersten Signalpfads, welche denselben Abstand zur Messrohrachse aufweisen und in den unterschiedlichen Ebenen liegen, proportional zu den Gewichtungsfaktoren eines analogen Mehrpfad-Ultraschall-Durchflussmessgeräts sind.

In einer weiteren Ausführungsform weist ein erfindungsgemäßes Ultraschall-Durchflussmessgerät einen Sender und zwei Empfänger auf. Der Sender sendet ein akustisches Signal, die Messrohrachse senkrecht schneidend in das Messrohr. An einem ersten Reflektor, welcher zwei Reflexionsflächen aufweist, wird das akustische Signal in zwei Teilabschnitte reflektiert. Beide Teilabschnitte weisen jeweils eine Richtungskomponente parallel zur Messrohrachse auf. Ein Teilabschnitt in Richtung der Strömung des Fluids im Messrohr parallel zur Messrohrachse, der andere Teilabschnitt entgegen der Strömungsrichtung des Fluids im Messrohr. Beide Teilabschnitte weisen des Weiteren zueinander parallele und einander entgegengesetzte Richtungskomponenten jeweils senkrecht auf die Messrohrachse und senkrecht zur Einstrahlungsrichtung des akustischen Signals in das Messrohr auf. Anschließend kann das aufgeteilte akustische Signal an weiteren Reflexionsflächen erfindungsgemäß reflektiert. Obgleich das akustische Signal am ersten Reflektor geteilt wird, wird es hier dennoch als sich auf einem Signalpfad fortbewegend bezeichnet.

Die Erfindung lässt zahlreiche Ausführungsformen zu. Einige davon sind nachfolgend anhand der Figuren näher erläutert werden. Gleiche Elemente sind in den Figuren mit gleichen Bezugszeichen versehen.
- Fig. 1: zeigt ein Mehrpfad-Ultraschall-Durchflussmessgerät des Stands der Technik,
- Fig. 2: zeigt ein erfindungsgemäßes Ultraschall-Durchflussmessgerät im Querschnitt,
- Fig. 3: zeigt ein erfindungsgemäßes Ultraschall-Durchflussmessgerät im Längsschnitt.

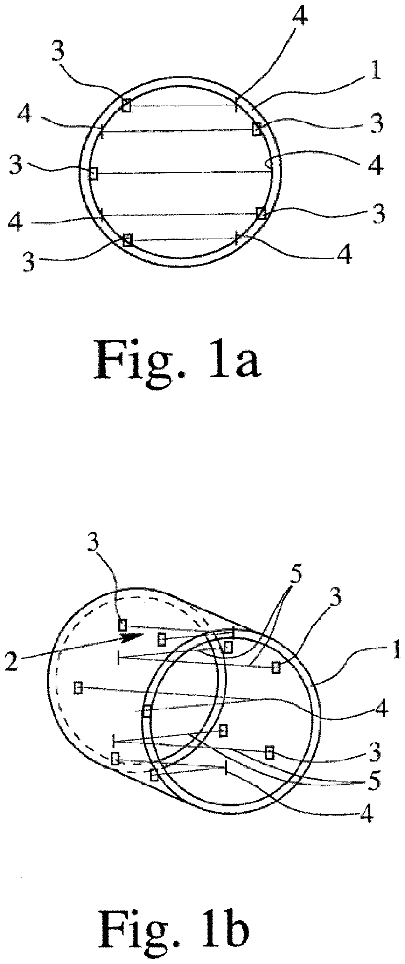

In Fig. 1a ist ein Mehrpfad-Ultraschall-Durchflussmessgerät des Stands der Technik im Querschnitt durch das Messrohr 1 dargestellt. Fig. 1b zeigt dasselbe Mehrpfad-Ultraschall-Durchflussmessgerät perspektivisch. Beide Figuren sind aus der DE 10 2007 004 936 B4 entnommen. Das Mehrpfad-Ultraschall-Durchflussmessgerät weist hierbei ein Messrohr 1 und zehn Ultraschallwandler 2 auf, welche zusammen mit fünf Ultraschallreflektoren 3 fünf V-förmige Signalpfade bilden. Jeweils zwei Ultraschallwandler 2 bilden ein Ultraschallwandlerpaar. Alle fünf V-förmigen Signalpfade bestehen aus zwei geraden Teilabschnitten. Einem ersten geraden Teilabschnitt vom ersten Ultraschallwandler 2 des Ultraschallwandlerpaares zum Ultraschallreflektor 3 und einem zweiten geraden Teilabschnitt vom Ultraschallreflektor 3 zum zweiten Ultraschallwandler 2 des Ultraschallwandlerpaares. Jedes dieser Ultraschallwandlerpaare liegt mit einem Ultraschallreflektor 3 in einer Ebene, welche einen vorgegebenen Abstand zur Messrohrachse aufweist. Auch beide geraden Teilabschnitte des jeweiligen V-förmigen Signalpfads liegen in diesen, somit fünf Ebenen, welche von den fünf V-förmigen Signalpfaden aufgespannt werden und welche fünf Ebenen parallel zueinander im Messrohr verlaufen.

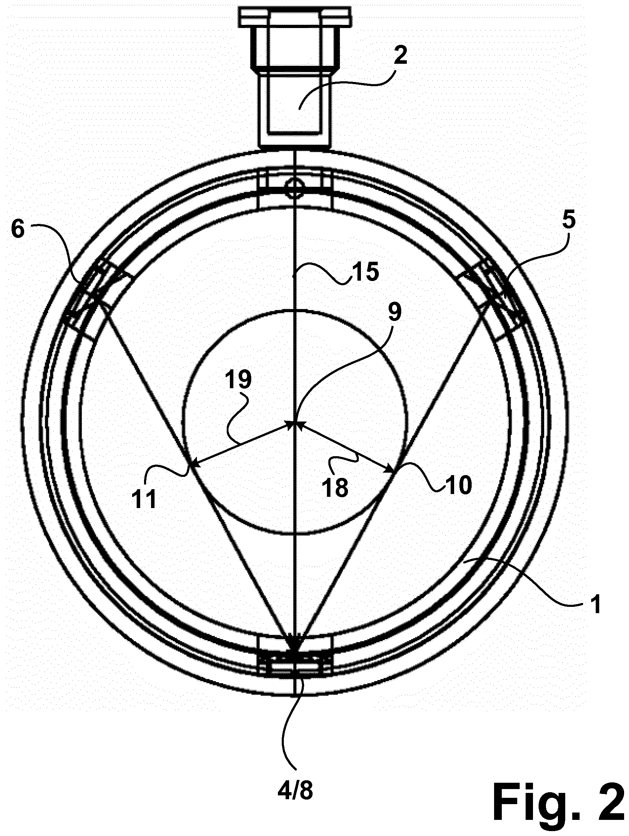

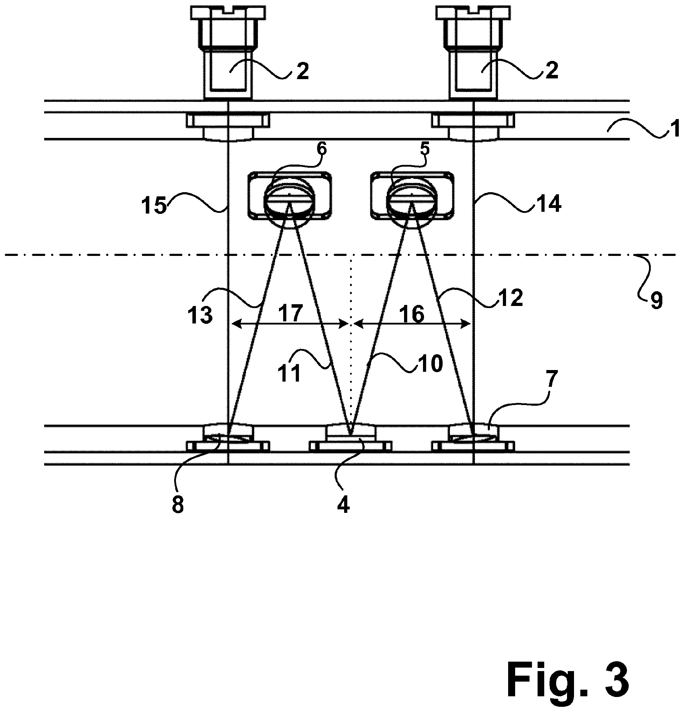

Fig.2 und Fig. 3 veranschaulichen nun eine Ausgestaltung eines erfindungsgemäßen Ultraschall-Durchflussmessgeräts. Der Quer- und der Längsschnitt durch das Messrohr 1 zeigen zwei Ultraschallwandler 2, welche als Sender und Empfänger ein akustisches Signal auf einen ersten Signalpfad senden und/oder dieses auf diesem Signalpfad empfangen. Sie bilden somit Anfang und Ende des ersten Signalpfads. Der Signalpfad besteht dabei aus mehreren geraden Teilabschnitten, welche sich zwischen Sender und Empfänger und dazwischen liegenden Reflexionsflächen erstrecken.

Vom Sender 2 ausgehend verläuft hier in diesem Ausgestaltungsbeispiel das akustische Signal entlang eines fünften Teilabschnitts 14 senkrecht die Messrohrachse 9 schneidend zu einer vierten Reflexionsfläche 7. An dieser wird das akustische Signal auf dem ersten Signalpfad zur zweiten Reflexionsfläche 5 entlang eines dritten Teilabschnitts 12 reflektiert. Dort wird das Signal wiederum in Richtung der ersten Reflexionsfläche 4 entlang eines ersten Teilabschnitts 10 reflektiert.

Der erste Teilabschnitt 10 und der dritte Teilabschnitt 12 liegen dabei in einer ersten gedachten Ebene. Diese ist parallel zur Messrohrachse 9. Beide Teilabschnitte 10 und 12 weisen denselben ersten Abstand 18 zur Messrohrachse 9 auf. Hier weist auch die erste Ebene diesen ersten Abstand zur Messrohrachse 9 auf. Die Summe der auf die Messrohrachse 9 projizierten Längen der beiden genannten Teilabschnitte 10 und 12 weist dabei einen vorgegeben Wert auf. Hier sind beide Teilabschnitte 10 und 12 zudem noch gleich lang und weisen dieselbe, auf die Messrohrachse 9 projizierte Länge auf. Die Summe der auf die Messrohrachse 9 projizierten Längen der Teilabschnitte, welche in der ersten Ebene liegen, ist hier gleich dem Abstand 16 der beiden Reflexionspunkte an der ersten und vierten Reflexionsfläche 4 und 7, und entsprechend eingezeichnet.

Von der ersten Reflexionsfläche 4 wird das akustische Signal des ersten Signalpfads entlang eines zweiten geraden Teilabschnitts 11 zu einer dritten Reflexionsfläche 6 reflektiert, von wo aus ein vierter Teilabschnitt 13 zu einer fünften Reflexionsfläche 8 führt. Wiederum liegen der zweite und der vierte Teilabschnitt 11 und 13 in einer gedachten, zweiten Ebene, welche parallel zur Messrohrachse 9 verläuft. Der zweite und vierte Teilabschnitt 11 und 13 weisen jeweils denselben Abstand 19 zur Messrohrachse 9 auf, welcher gleich groß ist, wie der oben genannte Abstand 18 des ersten und dritten Teilabschnitts 10 und 12 zur Messrohrachse 9. Die Länge der Strecke 17 zwischen der Reflexion an der ersten Reflexionsfläche 4 und an der Reflexion an der fünften Reflexionsfläche 8 entspricht der Summe aller auf die Messrohrachse projizierten Längen aller Teilabschnitte 11 und 13, welche in einer von der ersten Ebene verschiedenen, zur Messrohrachse 9 parallelen, zweiten Ebene verlaufen und welche denselben vorgegebenen Abstand 19 zur Messrohrachse 9 aufweisen, welche denselben vorgegebenen Wert ungleich Null aufweist, wie die entsprechende Summe aller auf die Messrohrachse projizierten Längen aller Teilabschnitte 10 und 12, welche in der zur Messrohrachse 9 parallelen, ersten Ebene verlaufen und welche den gleichen vorgegebenen Abstand 18 zur Messrohrachse 9 aufweisen.

Von der fünften Reflexionsfläche 8 wird schließlich das akustische Signal entlang eines sechsten Teilabschnitts 15 senkrecht zur Messrohrachse 9 zum Empfänger 2 reflektiert.

Die senkrechten fünften und sechsten Teilabschnitte 14 und 15 liegen in dieser Ausführungsform in einer dritten Ebene. Die dritte Ebene teilt hier das Messrohr 1 in zwei gleichgroße, nicht überlappende Hälften. Daneben teilt sie die erste Reflexionsfläche 4 in einer Geraden, in welcher sich hier die erste und die zweite Ebene schneiden. Erste und zweite Ebene weisen entsprechend jeweils einen gleich großen Winkel zur dritten Ebene auf, welche jeweils insbesondere 10-60° betragen, insbesondere den Wert 30° aufweisen. Die auf einen Längsschnitt, hier auf die dritte Ebene projizierten Winkel der Teilabschnitte zur Messrohrachse betragen bei Ultraschall-Durchflussmessgeräten üblicherweise, wie auch hier, zwischen 0°/180° und 90°, insbesondere zwischen +/-5° und +/- 60°, so dass zur Laufzeitdifferenzmessung die Teilabschnitte eine Richtungskomponente in oder entgegen der Strömungsrichtung des Fluids aufweisen.

Bevorzugt können zur Reflexion der Strahlen im Messrohr konkave Spiegel eingesetzt werden, um eine Verwehung der Ultraschallsignale bei hohen Durchflussgeschwindigkeiten zu verhindern.

### Bezugszeichenliste

- 1: Messrohr
- 2: Ultraschallwandler
- 3: Ultraschallreflektor
- 4: Erste Reflexionsfläche
- 5: Zweite Reflexionsfläche
- 6: Dritte Reflexionsfläche
- 7: Vierte Reflexionsfläche
- 8: Fünfte Reflexionsfläche
- 9: Messrohrachse
- 10: Erster gerader Teilabschnitt des ersten Signalpfads
- 11: Zweiter gerader Teilabschnitt des ersten Signalpfads
- 12: Dritter gerader Teilabschnitt des ersten Signalpfads
- 13: Vierter gerader Teilabschnitt des ersten Signalpfads
- 14: Fünfter gerader Teilabschnitt des ersten Signalpfads
- 15: Sechster gerader Teilabschnitt des ersten Signalpfads
- 16: Länge der auf die Messrohrachse projizierten ersten und dritten geraden Teilabschnitte des ersten Signalpfads
- 17: Länge der auf die Messrohrachse projizierten zweiten und vierten geraden Teilabschnitte des ersten Signalpfads
- 18: Abstand des ersten geraden Teilabschnitts des ersten Signalpfads zur Messrohrachse
- 19: Abstand des zweiten geraden Teilabschnitts des ersten Signalpfads zur Messrohrachse

## Patentansprüche

1. Ultraschall-Durchflussmessgerät,
welches ein Messrohr (1) mit einer geraden Messrohrachse sowie einer ersten Hälfte und einer zweiten Hälfte,
einen Sender (2) zum Senden eines akustischen Signals auf einen ersten Signalpfad,
einen Empfänger (2) zum Empfangen des akustischen Signals auf dem ersten Signalpfad
und zumindest eine erste Reflexionsfläche (4) umfasst, an welcher das akustische Signal auf dem ersten Signalpfad jeweils zumindest einmal reflektiert wird,
wobei das auf die erste Reflexionsfläche (4) einfallende akustische Signal und das an der ersten Reflexionsfläche (4) reflektierte akustische Signal jeweils entlang eines geraden Teilabschnitts (10, 11) des ersten Signalpfads verläuft,
**dadurch gekennzeichnet,**
**dass** der Sender (2), der Empfänger (2) und die erste Reflexionsfläche (4) so zueinander ausgerichtet und im oder am Messrohr (1) angeordnet sind, dass das akustische Signal auf dem ersten Signalpfad vom Sender (2) zum Empfänger (2) so an der ersten Reflexionsfläche (4) reflektiert wird,
**dass** die Summe aller auf die Messrohrachse (9) projizierten Längen (16, 17) aller Teilabschnitte (10, 12 oder 11, 13), welche in einer zur Messrohrachse (9) parallelen, ersten Ebene verlaufen einen vorgegebenen Wert ungleich Null aufweist, wobei die Teilabschnitte einen vorgegebenen Abstand (18, 19) ungleich Null zur Messrohrachse (9) aufweisen,
und wobei die Summe aller auf die Messrohrachse (9) projizierten Längen (16, 17) aller Teilabschnitte (10, 12 oder 11, 13), welche in einer von der ersten Ebene verschiedenen, zur Messrohrachse parallelen, zweiten Ebene verlaufen den gleichen vorgegebenen Wert aufweist, wobei die Teilabschnitte den gleichen vorgegebenen Abstand (18, 19) zur Messrohrachse (9) aufweisen,
und **dass** zwei aufeinanderfolgende Teilabschnitte (11 und 13) des Strahlengangs des ersten Signalpfades in der ersten Ebene liegen und dass diese Teilabschnitte (11 und 13) in einer ersten Hälfte des Messrohrs (1) verlaufen und, dass zwei aufeinanderfolgende Teilabschnitte (10 und 12) des Strahlengangs des ersten Signalpfades in der zweiten Ebene liegen und dass diese Teilabschnitte (10 und 12) in einer zweiten Hälfte des Messrohrs (1) verlaufen.

2. Ultraschall-Durchflussmessgerät nach Anspruch 1,
**dadurch gekennzeichnet,**
**dass** sich die erste und die zweite Ebene in einer Geraden schneiden, welche parallel zur Messrohrachse verläuft.

3. Ultraschall-Durchflussmessgerät nach Anspruch 2,
**dadurch gekennzeichnet,**
**dass** die Gerade in welcher sich die erste und die zweite Ebene schneiden in der ersten Reflexionsfläche (4) liegt.

4. Ultraschall-Durchflussmessgerät nach einem der Ansprüche 2 oder 3,
**dadurch gekennzeichnet,**
**dass** der Schnittwinkel der ersten und zweiten Ebene zwischen 2° und 175°, insbesondere zwischen 45° und 75° beträgt.

5. Ultraschall-Durchflussmessgerät nach einem der Ansprüche 1 bis 4,
**dadurch gekennzeichnet,**
**dass** eine dritte Ebene existiert, in welcher die Messrohrachse (9) und eine Gerade, in welcher sich die erste und die zweite Ebene schneiden, liegen, zu welcher dritten Ebene die erste und die zweite Ebene denselben Winkel aufweisen.

6. Ultraschall-Durchflussmessgerät nach einem der Ansprüche 1 bis 5,
**dadurch gekennzeichnet,**
**dass** der gerade Teilabschnitt (11) des auf die erste Reflexionsfläche (4) einfallenden akustischen Signals und der gerade Teilabschnitt (10) des an der ersten Reflexionsfläche (4) reflektierten akustischen Signals jeweils denselben ersten Abstand (18, 19) zur Messrohrachse (9) aufweisen.

7. Ultraschall-Durchflussmessgerät nach Anspruch 6,
**dadurch gekennzeichnet,**
**dass** der gerade Teilabschnitt (11) des auf die erste Reflexionsfläche (4) einfallenden akustischen Signals und der gerade Teilabschnitt (10) des an der ersten Reflexionsfläche (4) reflektierten akustischen Signals einen auf einen Querschnitt des Messrohrs (1) projizierten Winkel zwischen 2° und 175°, insbesondere zwischen 20° und 120° einschließen.

8. Ultraschall-Durchflussmessgerät nach einem der Ansprüche 6 bis 7,
**dadurch gekennzeichnet,**
**dass** der gerade Teilabschnitt (11) des auf die erste Reflexionsfläche (4) einfallenden akustischen Signals und der gerade Teilabschnitt (10) des an der ersten Reflexionsfläche (4) reflektierten akustischen Signals einen auf die dritte Ebene projizierten Winkel zwischen 2° und 175°, insbesondere zwischen 20° und 120° einschließen.

9. Ultraschall-Durchflussmessgerät nach einem der Ansprüche 6 bis 8,
**dadurch gekennzeichnet,**
**dass** der gerade Teilabschnitt (11) des auf die erste Reflexionsfläche (4) einfallenden akustischen Signals und der gerade Teilabschnitt (11) des an der ersten Reflexionsfläche (4) reflektierten akustischen Signals jeweils einen Winkel zwischen 10° und 60°, insbesondere zwischen 20° und 40° mit der dritten Ebene einschließen.

10. Ultraschall-Durchflussmessgerät nach einem der Ansprüche 1 bis 9,
**dadurch gekennzeichnet,**
**dass** der vorgegebene Wert der Summe aller auf die Messrohrachse (9) projizierten Längen (17) aller Teilabschnitte (11, 13) des ersten Signalpfads, welche in der ersten Ebene verlaufen, mit einer Berechnungsvorschrift in Abhängigkeit vom vorgegebenen Abstand (19) dieser Teilabschnitte (11, 13) von der Messrohrachse (9) berechnet sind.

## Claims

1. Ultrasonic flowmeter,
which comprises a measuring tube (1) with a straight measuring tube axis as well as a first half and a second half,
a transmitter (2) designed to transmit an acoustic signal to a first signal path,
a receiver (2) designed to receive the acoustic signal on the first signal path and at least a first reflection surface (4) at which the acoustic signal on the first signal path is reflected at least once,
wherein the acoustic signal acting on the first reflection surface (4) and the acoustic signal reflected at the first reflection surface (4) extend along a straight subsection (10, 11) of the first signal path,
**characterized in that**
the transmitter (2), the receiver (2) and the first reflection surface (4) are oriented towards one another in such a way and are arranged in or on the measuring tube (1) in such a way that the acoustic signal on the first signal path from the transmitter (2) to the receiver (2) is reflected at the first reflection surface (4) in such a way that the sum of all the lengths (16, 17), projected onto the measuring tube axis (9), of all the sub-sections (10, 12 or 11, 13) that extend in a first plane parallel to the measuring tube axis (9) has a predefined value which is unequal to zero, wherein the sub-sections have a predefined distance (18, 19) which is unequal to zero in relation to the measuring tube axis (9),
and wherein the sum of all the lengths (16, 17), projected onto the measuring tube axis (9), of all the sub-sections (10, 12 or 11, 13) that extend in a second plane which is different to the first plane and parallel to the measuring tube axis has the same predefined value, wherein the sub-sections have the same predefined distance (18, 19) in relation to the measuring tube axis (9),
and **in that** two consecutive sub-sections (11 and 13) of the optical path of the first signal path are located on the first plane and **in that** these sub-sections (11 et 13) extend in a first half of the measuring tube (1), and **in that** two consecutive sub-sections (10 and 12) of the optical path of the first signal path are located on the second plane and **in that** these sub-sections (10 and 12) extend in a second half of the measuring tube (1).

2. Ultrasonic flowmeter as claimed in Claim 1,
**characterized in that**
the first and the second plane intersect in a straight line which is parallel to the measuring tube axis.

3. Ultrasonic flowmeter as claimed in Claim 2,
**characterized in that**
the straight line in which the first and the second plane intersect are located in the first reflection surface (4).

4. Ultrasonic flowmeter as claimed in one of the Claims 2 or 3,
**characterized in that**
the angle of intersection of the first and of the second plane is between 2° and 175°, particularly between 45° and 75°.

5. Ultrasonic flowmeter as claimed in one of the Claims 1 to 4,
**characterized in that**
a third plane exists on which the measuring tube axis (9) and a straight line are located, wherein the first and second planes intersect on said straight line, wherein the first and second plane have the same angle in relation to the third plane.

6. Ultrasonic flowmeter as claimed in one of the Claims 1 to 5,
**characterized in that**
the straight subsection (11) of the acoustic signal acting on the first reflection surface (4) and the straight subsection (10) of the acoustic signal reflected at the first reflection surface (4) each have the same first distance (18, 19) in relation to the measuring tube axis (9).

7. Ultrasonic flowmeter as claimed in Claim 6,
**characterized in that**
the straight subsection (11) of the acoustic signal acting on the first reflection surface (4) and the straight subsection (10) of the acoustic signal reflected at the first reflection surface (4) enclose an angle, projected onto a cross-section of the measuring tube (1), of between 2° and 175°, particularly between 20° and 120°.

8. Ultrasonic flowmeter as claimed in one of the Claims 6 to 7,
**characterized in that**
the straight subsection (11) of the acoustic signal acting on the first reflection surface (4) and the straight subsection (10) of the acoustic signal reflected at the first reflection surface (4) enclose an angle, projected onto the third plane, of between 2° and 175°, particularly between 20° and 120°.

9. Ultrasonic flowmeter as claimed in one of the Claims 6 to 8,
**characterized in that**
the straight subsection (11) of the acoustic signal acting on the first reflection surface (4) and the straight subsection (10) of the acoustic signal reflected at the first reflection surface (4) enclose an angle of between 10° and 60°, particularly between 20° and 40° with the third plane.

10. Ultrasonic flowmeter as claimed in one of the Claims 1 to 9,
**characterized in that**
the predefined value of the sum of all lengths (17), projected onto the measuring tube axis (9), of all the sub-sections (11, 13) of the first signal path that extend in the first plane is calculated with a calculation rule depending on the predefined distance (19) of these sub-sections (11, 13) in relation to the measuring tube axis (9).

## Revendications

1. Débitmètre à ultrasons,
lequel débitmètre comprend un tube de mesure (1) avec un axe de tube de mesure droit ainsi qu'une première moitié et une deuxième moitié,
un émetteur (2) destiné à émettre un signal acoustique sur un premier trajet de signal, un récepteur (2) destiné à recevoir le signal acoustique sur le premier trajet de signal et au moins une première surface de réflexion (4) sur laquelle le signal acoustique sur le premier trajet de signal est à chaque fois réfléchi au moins une fois,
le signal acoustique incident sur la première surface de réflexion (4) et le signal acoustique réfléchi sur la première surface de réflexion (4) s'étendant respectivement le long d'une section partielle rectiligne (10, 11) du premier trajet de signal, **caractérisé**
**en ce que** l'émetteur (2), le récepteur (2) et la première surface de réflexion (4) sont orientés l'un par rapport à l'autre et disposés dans ou sur le tube de mesure (1) de telle sorte que le signal acoustique sur le premier trajet de signal de l'émetteur (2) au récepteur (2) est réfléchi sur la première surface de réflexion (4) en ce que la somme de toutes les longueurs (16, 17) projetées sur l'axe de tube de mesure (9) de toutes les sections partielles (10, 12 ou 11, 13), qui s'étendent dans un premier plan parallèle à l'axe de tube de mesure (9), présente une valeur prédéfinie différente de zéro, les sections partielles présentant une distance prédéfinie (18, 19) différente de zéro par rapport à l'axe de tube de mesure (9),
et la somme de toutes les longueurs (16, 17) - projetées sur l'axe de tube de mesure (9) de toutes les sections partielles (10, 12 ou 11, 13), qui s'étendent dans un deuxième plan différent du premier plan et parallèle à l'axe de tube de mesure - présente la même valeur prédéfinie, les sections partielles présentant la même distance prédéfinie (18, 19) par rapport à l'axe de tube de mesure (9),
et **en ce que** deux sections partielles successives (11 et 13) de l'axe optique du premier trajet de signal se trouvent dans le premier plan et en ce que ces sections partielles (11 et 13) s'étendent dans une première moitié du tube de mesure (1), et en ce que deux sections partielles successives (10 et 12) de l'axe optique du premier trajet de signal se trouvent dans le deuxième plan et en ce que ces sections partielles (10 et 12) s'étendent dans une deuxième moitié du tube de mesure (1).

2. Débitmètre à ultrasons selon la revendication 1,
**caractérisé**
**en ce que** le premier et le deuxième plan se coupent en une ligne droite qui est parallèle à l'axe de tube de mesure.

3. Débitmètre à ultrasons selon la revendication 2,
**caractérisé**
**en ce que** la ligne droite dans laquelle les premier et deuxième plans se coupent se trouve dans la première surface de réflexion (4).

4. Débitmètre à ultrasons selon l'une des revendications 2 ou 3,
**caractérisé**
**en ce que** l'angle d'intersection du premier et du deuxième plan est compris entre 2° et 175°, notamment entre 45° et 75°.

5. Débitmètre à ultrasons selon l'une des revendications 1 à 4,
**caractérisé**
**en ce qu'**il existe un troisième plan dans lequel l'axe de tube de mesure (9) et une droite dans laquelle les premier et deuxième plans se coupent, troisième plan par rapport auquel les premier et deuxième plans présentent le même angle.

6. Débitmètre à ultrasons selon l'une des revendications 1 à 5,
**caractérisé**
**en ce que** la section partielle rectiligne (11) du signal acoustique incident sur la première surface de réflexion (4) et la section partielle rectiligne (10) du signal acoustique réfléchi sur la première surface de réflexion (4) présentent chacune la même première distance (18, 19) par rapport à l'axe de tube de mesure (9).

7. Débitmètre à ultrasons selon la revendication 6,
**caractérisé**
**en ce que** la section partielle rectiligne (11) du signal acoustique incident sur la première surface de réflexion (4) et la section partielle rectiligne (10) du signal acoustique réfléchi sur la première surface de réflexion (4) forment un angle compris entre 2° et 175°, notamment entre 20° et 120°, projeté sur une section transversale du tube de mesure (1).

8. Débitmètre à ultrasons selon l'une des revendications 6 à 7,
**caractérisé**
**en ce que** la section partielle rectiligne (11) du signal acoustique incident sur la première surface de réflexion (4) et la section partielle rectiligne (10) du signal acoustique réfléchi sur la première surface de réflexion (4) forment un angle projeté sur le troisième plan compris entre 2° et 175°, notamment entre 20° et 120°.

9. Débitmètre à ultrasons selon l'une des revendications 6 à 8,
**caractérisé**
**en ce que** la section partielle rectiligne (11) du signal acoustique incident sur la première surface de réflexion (4) et la section partielle rectiligne (10) du signal acoustique réfléchi sur la première surface de réflexion (4) font chacune un angle compris entre 10° et 60°, notamment entre 20° et 40° avec le troisième plan.

10. Débitmètre à ultrasons selon l'une des revendications 1 à 9,
**caractérisé**
**en ce que** la valeur prédéfinie de la somme de toutes les longueurs (17) projetées sur l'axe de tube de mesure (9) de toutes les sections partielles (11, 13) du premier trajet de signal, lesquelles sections s'étendent dans le premier plan, est calculée avec une règle de calcul en fonction de la distance prédéfinie (19) de ces sections partielles (11, 13) par rapport à l'axe de tube de mesure (9).
